(19)

Europäisches
Patentamt
European
Patent Office
Office européen
des brevets

(11) **EP 3 819 835 A1**

(12) **EUROPEAN PATENT APPLICATION**
published in accordance with Art. 153(4) EPC

(43) Date of publication:
**12.05.2021 Bulletin 2021/19**

(21) Application number: **19895937.1**

(22) Date of filing: **24.10.2019**

(51) Int Cl.:
**G06Q 10/06** (2012.01)

(86) International application number:
**PCT/CN2019/113008**

(87) International publication number:
**WO 2020/119272 (18.06.2020 Gazette 2020/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.12.2018 CN 201811527051**

(71) Applicant: **Advanced New Technologies Co., Ltd.**
**George Town, Grand Cayman KY1-9008 (KY)**

(72) Inventors:
• **CHENG, Yu**
**Hangzhou, Zhejiang 311121 (CN)**

• **LIU, Tengfei**
**Hangzhou, Zhejiang 311121 (CN)**
• **LIU, Xiaoyun**
**Hangzhou, Zhejiang 311121 (CN)**
• **LU, Xun**
**Hangzhou, Zhejiang 311121 (CN)**
• **CHEN, Tao**
**Hangzhou, Zhejiang 311121 (CN)**
• **YANG, Yang**
**Hangzhou, Zhejiang 311121 (CN)**
• **XU, Yi**
**Hangzhou, Zhejiang 311121 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **RISK IDENTIFICATION MODEL TRAINING METHOD AND APPARATUS, AND SERVER**

(57) An implementation of the present specification provides a method for training a risk identification model. Because different types of unsupervised machine learning algorithms have different requirements for features, a type of a target unsupervised machine learning algorithm can be determined first, then various types of feature information are extracted from input information, and then target feature information is extracted from the feature information in a way of extracting feature information corresponding to the type of the target unsupervised machine learning algorithm. Because the target feature information adapted to the target unsupervised machine learning algorithm is extracted, a target risk identification model obtained through training by using the target feature information based on the target unsupervised machine learning algorithm has higher identification accuracy and ensures the accuracy of risk identification.

FIG. 2

EP 3 819 835 A1

## Description

## TECHNICAL FIELD

Implementations of the present specification pertain to the field of Internet technologies, and in particular, to a method and apparatus for training a risk identification model and a server.

## BACKGROUND

With the rapid development of the Internet, more and more services can be implemented through the network, such as online payment, online shopping, online transfer and other Internet services. The Internet brings risks while bringing convenience to people's lives. One type of risk is that users use their own accounts to conduct false transactions to take illegal interests. This risk is called false transaction risk. The identification of false transactions is an important part and cornerstone of capital security, but it is often difficult to obtain historical transaction labels of bad people, so the identification of false transactions is an unsupervised machine learning issue. How to obtain a risk identification model with high identification accuracy against false transactions through training by using an unsupervised machine learning algorithm is the key to risk decision.

## SUMMARY

Implementations of the present specification provide a method and apparatus for training a risk identification model and a server.

According to a first aspect, an implementation of the present specification provides a method for training a risk identification model, including: determining a type of a target unsupervised machine learning algorithm; extracting feature information from input information, and extracting target feature information from the feature information in a way of extracting feature information corresponding to the type of the target unsupervised machine learning algorithm; and obtaining a target risk identification model corresponding to the target unsupervised machine learning algorithm by training a risk identification model using the target feature information and the target unsupervised machine learning algorithm.

According to a second aspect, an implementation of the present specification provides a risk identification method, including: obtaining a plurality of target risk identification models corresponding to a plurality of target unsupervised machine learning algorithms by performing model training using the method according to the first aspect; determining a first risk identification model having identification accuracy meeting a predetermined threshold from the plurality of target risk identification models; and performing risk identification on new samples based on the first risk identification model to obtain a risk identification result.

According to a third aspect, an implementation of the present specification provides an apparatus for training a risk identification model, including: a determining unit, configured to determine a type of a target unsupervised machine learning algorithm; a feature extraction unit, configured to extract feature information from input information, and extract target feature information from the feature information in a way of extracting feature information corresponding to the type of the target unsupervised machine learning algorithm; and a training unit, configured to obtain a target risk identification model corresponding to the target unsupervised machine learning algorithm by training a risk identification model using the target feature information and the target unsupervised machine learning algorithm.

According to a fourth aspect, an implementation of the present specification provides a server, including a memory, a processor, and a computer program stored in the memory and executable on the processor, where the processor implements the steps of any above method for training a risk identification model when executing the program.

According to a fifth aspect, an implementation of the present specification provides a computer-readable storage medium storing a computer program, where when the program is executed by a processor, the steps of any above method for training a risk identification model are implemented.

The implementations of the present specification have the following beneficial effects:

In the implementations of the present specification, because different types of unsupervised machine learning algorithms have different requirements for features, a type of a target unsupervised machine learning algorithm can be determined first, then various types of feature information are extracted from input information, and then target feature information is extracted from the feature information in a way of extracting feature information corresponding to the type of the target unsupervised machine learning algorithm. Because the target feature information adapted to the target unsupervised machine learning algorithm is extracted, a target risk identification model is trained based on the target unsupervised machine learning algorithm by using target features as training samples, so that the target risk identification model has higher identification accuracy and ensures the accuracy of risk identification. In addition, in the field of risk identification, automatic model feature processing and risk identification modeling for specific types of unsupervised machine learning algorithms are implemented. Risk identification models can be extensively built in an automated way to improve individual models and solutions.

## BRIEF DESCRIPTION OF DRAWINGS

FIG. 1 is a schematic diagram illustrating an application scenario of training of a risk identification model according to an implementation of the present specification;

FIG. 2 is a flowchart illustrating a method for training a risk identification model according to a first aspect of an implementation of the present specification;

FIG. 3 is a schematic structural diagram illustrating an apparatus for training a risk identification model according to a second aspect of an implementation of the present specification; and

FIG. 4 is a schematic structural diagram illustrating a server corresponding to training of a risk identification model according to a third aspect of an implementation of the present specification.

## DESCRIPTION OF IMPLEMENTATIONS

For a better understanding of the above technical solutions, the technical solutions of implementations of the present specification will be described in detail below with reference to the accompanying drawings and specific implementations. It should be understood that the implementations of the present specification and specific features thereof are a detailed description of the technical solutions of the implementations of the present specification, rather than a limitation to the technical solutions of the present specification. The implementations of the present specification and technical features thereof can be combined with each other provided that no conflict occurs.

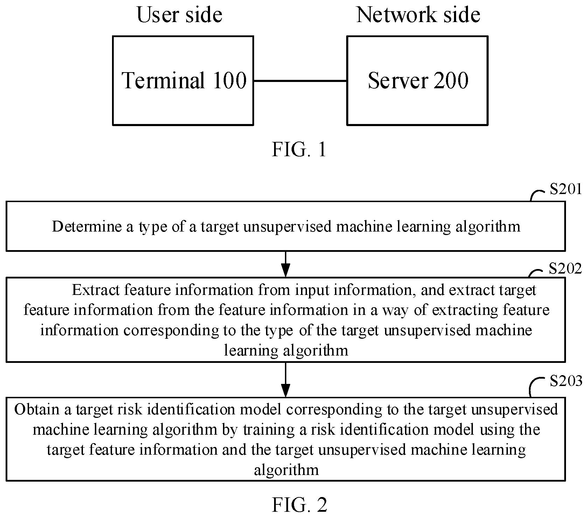

FIG. 1 is a schematic diagram illustrating an application scenario of training of a risk identification model according to an implementation of the present specification. A terminal 100 is located on the user side and communicates with a server 200 on the network side. A user can use the terminal 100 to obtain transaction information generated by an APP or a website and various types of information corresponding to a transaction. The server 200 collects the transaction information and various types of information generated by each terminal, and implements a method for training a risk identification model in the implementations accordingly. The implementations can be applied to risk identification scenarios, such as an anti-cash-out interception scenario and a false transaction identification scenario.

According to a first aspect, an implementation of the present specification provides a method for training a risk identification model. Referring to FIG. 2, the method includes steps S201-S203.

S201: Determine a type of a target unsupervised machine learning algorithm.

S202: Extract feature information from input information, and extract target feature information from the feature information in a way of extracting feature information corresponding to the type of the target unsupervised machine learning algorithm.

S203: Obtain a target risk identification model corresponding to the target unsupervised machine learning algorithm by training a risk identification model using the target feature information and the target unsupervised machine learning algorithm.

The input information includes one or more of user profile information, historical transaction information, device medium information, geographical location information, address book information, or external information.

Specifically, the method according to the implementations is mainly applied to scenarios of risk identification of false transactions and anti-cash out transactions, and the like. For example, in the field of wireless payment, one type of risk is that users use their own accounts to conduct false transactions to take illegal interests. The transactions are often false because they are not for the purposes of actual purchase. This risk is called false transaction risk. For example, a user makes a transaction for obtaining rewards resources of a payment platform for rewarding person-to-person spreading, and after receiving the resources, colludes with a merchant to transfer part of the transaction amount to the user. Such a false transaction will greatly impair the interests of the payment platform. The identification of false transactions is an important part and cornerstone of protecting capital security. It is often difficult to obtain historical transaction labels of bad people, so the identification of false transactions is a matter of unsupervised machine learning.

Unsupervised machine learning has always been a difficult point in the field of machine learning and risk control. The method according to the implementations is described in detail by using a false transaction identification scenario as an example. Different from the conventional unsupervised machine learning, this implementation identifies false transactions based on an anomaly problem detection, performs module design and construction of an automatic modeling method from the data level, feature processing level and model selection level, and performs automatic solution matching and model output application based on different types of specific problems and data.

Further, there are many commonly used unsupervised machine learning algorithms. The method according to the implementations classifies the commonly used unsupervised machine learning algorithms, and selects feature processing methods for different types of unsupervised machine learning algorithms. First, in the method according to the implementations, a plurality of risk identification models can be obtained through training by using different types of unsupervised machine learning algorithms. It is assumed that unsupervised machine learning algorithm A is of type 1, unsupervised machine learning algorithm B is of type 2, and unsupervised machine learning algorithm C is of type 3. The server can separately perform training by using each above unsupervised machine learning algorithm to obtain a risk identification model corresponding to the algorithm.

Specifically, in the training of the risk identification model, the type of the target unsupervised machine learning algorithm is firstly determined through step S201. For example, when unsupervised machine learning algorithm C is used for model training, it is determined that the type of unsupervised machine learning algorithm C is type 3.

Further, in the implementations, the server maintains transaction information generated by each user, and can obtain, through user authorization, device information of each terminal generating the transaction. The server can obtain multi-dimensional input information, mainly including various data tables and historical information. In the implementations, the example main input information types are listed as follows.

Full user profile information, including basic attributes of users, such as age, gender, occupation, and hobbies, and comprehensive evaluation indicators, such as the user's account security level, junk registration risk score, and cheating risk score. The profile information data is described from the basic information of users to account risks, and comprehensive score profiles mainly come from the evaluation and description of accounts in some risk control systems or marketing systems.

Historical transaction information, mainly referring to the transaction behavior in the user's history. It can also be divided into two categories. One category is the transaction details within a period of time in the user's history, including transaction time, amount, payee, transaction devices, internet protocol address (IP), and the like; and the other category is summary data, such as the number of transactions in a period of time in the user's history and accumulated amount of transactions.

Device medium information, mainly used to describe attributes and comprehensive scores of devices, such as activation time of a certain device and the number of login accounts of the device in history. In addition, some comprehensive scores of the device evaluation based on risk control are further included, such as whether a device has been stolen, and false transactions conducted through the device in the history.

Geographical location information, mainly including various location data, such as addresses of transactions, addresses of stores or merchants corresponding to transactions, as well as aggregated risk data of various risks in different regions.

Address book information, including the user's mobile phone number and mobile phone address book. Mobile phone number data is a profile of each mobile phone number, which includes various natural person information and account risk information when the mobile phone number is used as an account. The other part is to describe the direct relationship, such as intimacy, between the account and other accounts based on the address book corresponding to the mobile phone number, or deduce the characteristics and features of a natural person behind the account based on the description of the account by other mobile phone numbers in their address books.

External information, mainly referring to data that cannot be directly obtained in a system. For example, for a financial payment platform, the external information may include the following information of a person corresponding to the account: account statement in a bank and loan credit, payment information at other mobile payment terminals, which are all very important for a financial platform.

Among the above input information, input information related to user privacy, such as address book information, device medium information, geographical location information, and external information, can be obtained through user authorization. During specific implementation, the input information can be set according to the needs of an actual scenario, which does not limit the scope of the present application.

Further, in the implementations, various types of features can be automatically generated based on the input information in step S202. The purpose of automatic generation of feature information is to generate a large number of features as alternative variables into a model, so as to expand and derive feature types. In the implementations, the types of the feature information are roughly divided into frequency features, location features, graph features, and sequence features, which are mainly automatically generated based on different data types at the data layer.

Frequency feature information: For example, the login times and the number of transaction days of the user in the past period of time can be calculated from the above input information. Such feature information is mainly based on the combination traversal of different data subjects in different time windows and cumulative functions. For example, frequency features mainly include three parts.

1) Main part: It mainly refers to the dimensions of input data, including user dimension, device dimension, environment dimension, location dimension, communication identification dimension, and the like.
2) Cumulative window: Usually, several different time lengths representing short-term, medium-term and long-term are selected, such as 1 hour, 1 day, 7 days and 30 days.
3) Cumulative function: It mainly refers to types of operations on the data, such as number of times, the number of days, maximum value, minimum value, and sum value. Therefore, a large number of feature variables can be automatically generated based on the combinations of the above operations.

Location feature information: Based on historical transaction information and geographical location information, the following features can be extracted: geographical coordinates of transactions, geographic coordinates of merchants, and locations of the transactions in urban areas.

Graph features: Specifically, based on historical transaction information in the above input information, a transaction graph can be constructed with buyers and sellers as nodes (vertexes) and transactions between the buyers and the sellers as edges, and the information in the graph can be used to construct variable features, which can be roughly divided into two categories:

1) The information of the nodes or the edges in the graph, such as the number of merchants in current buyer (user) transactions and the number of buyers in seller transactions, is directly characterized.
2) Based on some community discovery algorithms, the aggregation in the graph is identified, and then a graph feature similar to the above is constructed for a subgraph with aggregation. An example of a typical feature is the proportion of a buyer's transactions in the subgraph to all transactions of the buyer, and this feature can be used to reflect some features of a user group.

Behavior sequence feature information: It is mainly used to describe a user's behavior features, which is mainly divided into two categories:

1) The frequency of different behavior types is calculated. For example, the number of clicks is calculated.
2) Embedding of sequences based on deep learning is performed to express each behavior sequence via a vector. For example, a behavior sequence is transformed into an n-dimensional vector based on a long short term memory (LSTM), and the vector corresponds to n dimensions of features.

All types of feature information generated above can be used as candidate features of each unsupervised machine learning algorithm. In the implementations, different types of unsupervised machine learning algorithms need to extract different feature information, and feature selection and transformation are related to the types of unsupervised machine learning algorithms. Therefore, the feature information adapted to the algorithms needs to be extracted, based on different types of unsupervised machine learning algorithms, and from the above different types of feature information by using step S202.

Further, in an abnormal transaction identification scenario, an unsupervised anomaly detection model is mainly used to identify samples different from most other samples. For example, in the identification of false transactions, it can be considered that most transactions are true and legitimate, and only a small number of people are trying to conduct false transactions. In the example implementations, a tree-based type and a distance-based type unsupervised machine learning algorithms are used for anomaly detection, and methods for extracting feature information based on the two types of unsupervised machine learning algorithms are described in detail below.

The first type is tree-based unsupervised machine learning. The method for extracting feature information can be: determining a key performance indicator value of each piece of feature information; and extracting, based on the key performance indicator value of each piece of feature information, target feature information from the feature information by using a policy, predetermined or dynamically determined.

Specifically, in the example implementations, using the abnormal transaction identification scenario as an example, the target feature information needs to be trained by using a tree-based unsupervised machine learning algorithm to obtain an abnormal transaction identification model (namely, a target risk identification model). This algorithm includes an isolation forest algorithm. The tree-based unsupervised machine learning algorithm has higher requirements for the distribution of feature information. On the one hand, features are required to have stronger interpretability, and on the other hand, there are higher requirements for "a small amount is abnormal". For example, as most of normal users have conducted less than 10 transactions in a single day, only a few people conduct more than 10 transactions in a single day, and these people are abnormal users. Therefore, when "the number of transactions of a user in a single day" is used as a feature, users that conduct excessive transactions (e.g., more than 10 transactions) are abnormal users.

Therefore, in the implementations, the key performance indicator (KPI) value of each piece of feature information can be determined, and the key performance indicator value includes one or more a kurtosis value or a dispersion value. Based on the KPI of each piece of feature information, the target feature information corresponding to the tree-based unsupervised machine learning type can be extracted from the above plurality of types of feature information by using the determined policy.

Then, the feature information having key performance indicator value that meets a preset relationship with a preset performance indicator value can be used as target feature information; or based on the key performance indicator value of each piece of feature information, the feature information is ranked in a predetermined way, and the feature information ranked before a predetermined place is used as target feature information.

Specifically, the kurtosis value of feature information can reflect the concentration of the feature information, and a higher kurtosis value indicates that the feature information is more concentrated. For the tree-based unsupervised machine learning algorithm, centralized features need to be selected into a model for training. Therefore, the KPI can be set as the kurtosis value, and the kurtosis of each piece of feature information can be obtained. For feature information with n values, the kurtosis value of the feature sample is:

$$g_2 = \frac{m_4}{m_2^2} - 3 = \frac{\frac{1}{n}\sum_{i=1}^{n}(x_i - \bar{x})^4}{\left(\frac{1}{n}\sum_{i=1}^{n}(x_i - \bar{x})^2\right)^2} - 3$$

where m4 is the fourth-order sample central moment, m2 is the second-order central moment (namely, the sample variance), Xi is the ith value, and x is the average of n values.

Then, feature selection is performed based on the kurtosis value of each piece of feature information, to select target features corresponding to the tree-based unsupervised machine learning algorithm. Some most suitable features are selected from a large number of existing features into a model. The core of automatic feature selection is to select appropriate target feature information based on the definition of anomaly in the model and the kurtosis value. Therefore, all feature information is traversed to rank the feature information in descending order of the kurtosis values of the feature information, and the first M pieces of feature information is selected as the target feature information into the model. During specific implementation, the value of M can be set based on an empirical value, or can be a matching value determined after many tests. This does not limit the scope of the present application.

Certainly, a predetermined kurtosis value can also be set, and when the kurtosis value of the feature information is greater than the predetermined kurtosis value, the predetermined kurtosis value is used as the target feature. During specific implementation, the predetermined kurtosis value can be set according to actual needs, which does not limit the scope of the present application.

Specifically, the dispersion value of feature information can reflect the concentration of the feature information, and a smaller dispersion value indicates that the feature information is more concentrated. For the tree-based unsupervised machine learning algorithm, centralized features need to be selected into a model for training. Therefore, the KPI can be set as the dispersion value to obtain the dispersion value of each piece of feature information.

Then, feature selection is performed based on the dispersion value of each feature information, so as to select target features corresponding to the tree-based unsupervised machine learning algorithm. Some of the most suitable features are selected from a large number of existing features into a model. The core of automatic feature selection is to select appropriate target feature information based on the definition of anomaly in the model and the dispersion value. Therefore, all feature information is traversed to rank the feature information in a sequence based on the dispersion values of the feature information, e.g., from small to large, and the first K pieces of feature information are selected as the target feature information into the model. During specific implementation, the value of K can be set based on an empirical value, or can be a matching value determined after many experiments, which does not limit the scope of the present application.

Certainly, a predetermined dispersion value can also be set, and when the dispersion value of the feature information is less than the predetermined dispersion value, the feature information is used as the target feature. During specific implementation, the predetermined dispersion value can be set according to actual needs, which does not limit the scope of the present application.

The second type is distance-based unsupervised machine learning. The method for extracting target feature information can be: performing dimensionality reduction transformation on the feature information to obtain target feature information.

Specifically, in the implementations, the types of distance-based unsupervised machine learning, for example, k nearest neighbor (KNN) and connectivity-based outlier factor (COF) do not have good effect on high-dimensional data. For example, the similarity between users is calculated, and the similarities are classified into one category. In distance calculation, a very important factor is the dimension of features. Generally, it is difficult to calculate the distance accurately in the case of high dimension (with many features). Therefore, based on the unsupervised machine learning algorithm, dimensionality reduction transformation needs to be performed on the feature information to obtain target feature information after dimensionality reduction. During specific implementations, dimensionality reduction can be performed by using various approaches, for example, simple methods such as principal component analysis (PCA), or transformation methods specifically for anomaly detection and identification, such as dimensionality reduction for outlier detection (DROD). During specific implementations, the dimensionality reduction method can be selected according to actual needs, which does not limit the scope of the present application.

Certainly, during specific implementations, a plurality of types of unsupervised machine learning algorithms can be used, each type of unsupervised machine learning algorithm corresponds to a way of extracting feature information adapted to this type of algorithm, and the target feature information that is most suitable for this type of unsupervised machine learning algorithm is extracted.

Further, after the target feature information is extracted by using the feature extraction approach corresponding to the target unsupervised machine learning algorithm, step S203 is performed to train the target feature information based on the target unsupervised machine learning algorithm to obtain a target risk identification model corresponding to the target unsupervised machine learning algorithm.

As such, a plurality of target risk identification models corresponding to a plurality of target unsupervised machine learning algorithms can be obtained. Finally, a first risk identification model with identification accuracy meeting a predetermined threshold is determined from the plurality of target risk identification models, and risk identification is performed on new samples based on the first risk identification model to obtain a risk identification result.

Specifically, in the implementations, suitable target feature information can be extracted for different types of unsupervised machine learning algorithms respectively, and then the target feature information is used as training samples for the target unsupervised machine learning algorithm to perform model training to obtain the final target risk identification model.

For example, it is assumed that unsupervised machine learning algorithm A is of type 1, unsupervised machine learning algorithm B is of type 2, and unsupervised machine learning algorithm C is of type 3. Target feature information 1 corresponding to type 1 is extracted suitable for unsupervised machine learning algorithm A, and target risk identification model 1 is obtained after training on target feature information 1 using unsupervised machine learning algorithm A. Similarly, target feature information 2 corresponding to type 2 is extracted suitable for unsupervised machine learning algorithm B, and target risk identification model 2 is obtained after training on target feature information 2 using unsupervised machine learning algorithm B. Similarly, target feature information 3 corresponding to type 3 is extracted suitable for unsupervised machine learning algorithm C, and target risk identification model 3 is obtained after training on target feature information 3 using unsupervised machine learning algorithm C.

The accuracy of target risk identification model 1, target risk identification model 2, and target risk identification model 3 can be verified with samples with known attributes to obtain identification accuracy of each target risk identification model, and the target risk identification model with the highest identification accuracy is selected therefrom. Assuming that target risk identification model 3 is selected, then it is used to perform risk identification on new samples.

Further, in the implementations, the accuracy of the target risk identification model can be verified at determined time intervals (such as 1 month or 2 months). If the accuracy of the target risk identification model decreases more and the model degrades significantly, the target risk identification model can be retrained to ensure the accuracy of risk identification.

As such, in the methods according to the implementations, the types of the target unsupervised machine learning algorithms are determined, so that the target feature information can be extracted from the feature information in feature extraction approaches corresponding to the types of the target unsupervised machine learning algorithms, respectively. Because the feature information suitable for the target unsupervised machine learning algorithm is extracted, finally the target feature information is used to train models based on the target unsupervised machine learning algorithm, so that the obtained target risk identification model corresponding to the type of unsupervised machine learning algorithm has higher identification accuracy. In addition, because target risk identification models corresponding to a plurality of types are trained in the implementations, finally the target risk identification model with the highest identification accuracy is selected to identify new samples, so that the accuracy of risk identification can be further ensured, and the stability of making relevant risk decisions based on the risk identification result is also ensured.

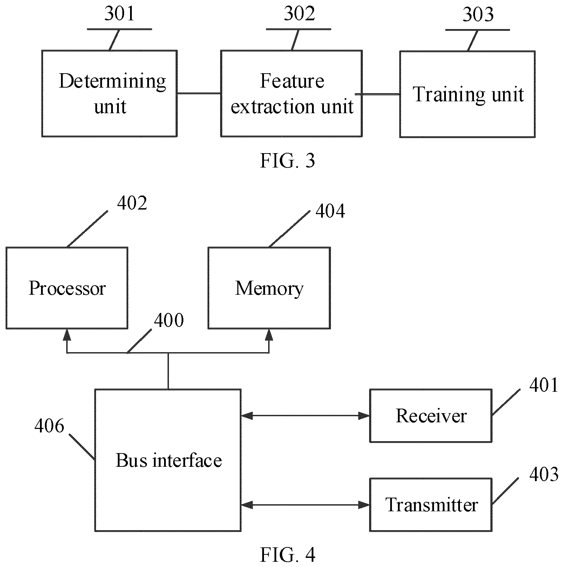

According to a second aspect, based on the same inventive concept, implementation 2 of the present specification provides an apparatus for training a risk identification model. Referring to FIG. 3, the apparatus includes: a determining unit 301, configured to determine a type of a target unsupervised machine learning algorithm; a feature extraction unit 302, configured to extract feature information from input information, and extract target feature information from the feature information in a way of extracting feature information corresponding to the type of the target unsupervised machine learning algorithm; and a training unit 303, configured to obtain a target risk identification model corresponding to the target unsupervised machine learning algorithm by training a risk identification model using the target feature information and the target unsupervised machine learning algorithm.

In an alternative implementation, the feature extraction unit 302 is specifically configured to: determine a key performance indicator value of each piece of feature information if the type is a tree-based unsupervised machine learning type; and extract, based on the key performance indicator value of each piece of feature information, target feature information from the feature information based on a preset policy.

In an alternative implementation, the feature extraction unit 302 is specifically configured to: determine the feature information having key performance indicator value that meets a preset relationship with a preset performance indicator value as the target feature information; or rank, based on the key performance indicator value of each piece of feature information, the feature information in a predetermined way, and determine the feature information that is ranked before a predetermined ranking place as target feature information.

In an alternative implementation, the feature extraction unit 302 is specifically configured to: perform dimensionality reduction transformation on the feature information to obtain target feature information if the type is a distance-based unsupervised machine learning type.

In an alternative implementation, the input information includes one or more of user profile information, historical transaction information, device medium information, geographical location information, address book information, or external information.

According to a third aspect, based on the same inventive concept, implementation 3 of the present specification provides a risk identification apparatus, referring to FIG. 3, including: a risk identification unit, configured to: determine a first risk identification model having identification accuracy meeting a predetermined threshold from a plurality of target risk identification models that are trained by the apparatus for training a risk identification model and correspond to a plurality of target unsupervised machine learning algorithms, and perform risk identification on new samples based on the first risk identification model to obtain a risk identification result.

According to a fourth aspect, based on the same inventive concepts as the method for training a risk identification model according to the above implementations, the present invention further provides a server. As shown in FIG. 4, the server includes a memory 404, a processor 402, and a computer program stored in the memory 404 and executable on the processor 402, where the processor 402 implements the steps of any one of the method for training a risk identification model and the risk identification method above when executing the program.

In FIG. 4, a bus architecture (represented by a bus 400) is provided. The bus 400 can include any number of interconnected buses and bridges. The bus 400 links various circuits including one or more processors represented by the processor 402 and memories represented by the memory 404. The bus 400 can also link various other circuits, such as peripheral devices, voltage regulators and power management circuits, which are known in the art, and therefore are not further described herein. A bus interface 406 provides an interface between the bus 400 and a receiver 401 and a transmitter 403. The receiver 401 and the transmitter 403 can be the same element, namely, a transceiver, which provides a unit for communication with various other apparatuses on a transmission medium. The processor 402 is responsible for management of the bus 400 and general processing, while the memory 404 can be configured to store data used by the processor 402.

According to a fifth aspect, based on the inventive concepts of the method for training a risk identification model and the risk identification method according to the above implementations, the present invention further provides a computer-readable storage medium storing a computer program, where when the program is executed by a processor, the steps of any one of the above methods for training a risk identification model are implemented.

The present specification is described with reference to flowcharts and/or block diagrams of methods, devices (systems), and computer program products according to the implementations of the present specification. It should be understood that each flow and/or block in the flowcharts and/or block diagrams, and combinations of flows and/or blocks in the flowcharts and/or block diagrams can be implemented by using computer program instructions. These computer program instructions can be provided to a processor of a general-purpose computer, a special-purpose computer, an embedded processor or another programmable data processing device to produce a machine, so that the instructions executed by the processor of the computer or another programmable data processing device produce a device for implementing functions specified in one or more flows in the flowchart and/or one or more blocks in the block diagram.

These computer program instructions can also be stored in a computer-readable memory that can direct a computer or another programmable data processing device to operate in a specific way, so that the instructions stored in the computer-readable memory produce an article of manufacture including an instruction device, and the instruction device implements functions specified in one or more flows of the flowchart and/or one or more blocks of the block diagram.

These computer program instructions can also be loaded onto a computer or another programmable data processing device, so that a series of operation steps are executed on the computer or another programmable device to perform computer-implemented processing, and thus the instructions executed on the computer or another programmable device provide steps for implementing functions specified in one or more flows of the flowchart and/or one or more blocks of the block diagram.

Although preferred implementations of the present specification have been described, a person skilled in the art can make additional changes and modifications to these implementations once he/she knows basic inventive concepts. Therefore, the appended claims are intended to be interpreted as including the preferred implementations and all changes and modifications falling within the scope of the present specification.

Obviously, a person skilled in the art can make various modifications and variations to the present specification without departing from the spirit and scope of the present specification. As such, if these modifications and variations of the present specification fall within the scope of the claims of the present specification and equivalent technologies thereof, the present specification is also intended to include these modifications and variations.

## Claims

1. A method for training a risk identification model, comprising:

   determining a type of a target unsupervised machine learning algorithm;
   extracting feature information from input information, and extracting target feature information from the feature information in a way of extracting feature information corresponding to the type of the target unsupervised machine learning algorithm; and

obtaining a target risk identification model corresponding to the target unsupervised machine learning algorithm by training a risk identification model using the target feature information and the target unsupervised machine learning algorithm.

2. The method according to claim 1, wherein the input information includes one or more of user profile information, historical transaction information, device medium information, geographical location information, address book information, or external information.

3. The method according to claim 2, wherein the feature information includes one or more of frequency feature information, location feature information, graph feature information and behavior sequence feature information in the input information.

4. The method according to claim 1, wherein the extracting the target feature information from the feature information in the way of extracting feature information corresponding to the type of the target unsupervised machine learning algorithm includes:

   determining a key performance indicator value of each piece of feature information in response to that the type is a tree-based unsupervised machine learning type; and
   extracting, based on the key performance indicator value of each piece of feature information, target feature information from the feature information based on a preset policy.

5. The method according to claim 4, wherein the extracting, based on the key performance indicator value of each piece of feature information, the target feature information from the feature information based on the preset policy includes:

   determining feature information having key performance indicator value that meets a preset relationship with a preset performance indicator value as the target feature information; or
   ranking, based on the key performance indicator value of each piece of feature information, the feature information in a predetermined way, and determining feature information that is ranked before a predetermined ranking place as the target feature information.

6. The method according to claim 4, wherein the key performance indicator value includes one or more of a kurtosis value or a dispersion value.

7. The method according to claim 1, wherein the extracting the target feature information from the feature information in the way of extracting feature information corresponding to the type of the target unsupervised machine learning algorithm includes: performing dimensionality reduction transformation on the feature information to obtain target feature information in response to that the type is a distance-based unsupervised machine learning type.

8. A risk identification method, comprising:

   obtaining a plurality of target risk identification models corresponding to a plurality of target unsupervised machine learning algorithms by performing model training using a method according to any one of claims 1 to 7;
   determining a first risk identification model having identification accuracy meeting a predetermined threshold from the plurality of target risk identification models; and
   performing risk identification on new samples based on the first risk identification model to obtain a risk identification result.

9. An apparatus for training a risk identification model, comprising:

   a determining unit, configured to determine a type of a target unsupervised machine learning algorithm;
   a feature extraction unit, configured to extract feature information from input information, and extract target feature information from the feature information in a way of extracting feature information corresponding to the type of the target unsupervised machine learning algorithm; and
   a training unit, configured to obtain a target risk identification model corresponding to the target unsupervised machine learning algorithm by training a risk identification model using the target feature information and the target unsupervised machine learning algorithm.

10. The apparatus according to claim 9, wherein the feature extraction unit is specifically configured to:

   determine a key performance indicator value of each piece of feature information in response to that the type is a tree-based unsupervised machine learning type; and
   extract, based on the key performance indicator value of each piece of feature information, target feature information from the feature information based on a preset policy.

**11.** The apparatus according to claim 10, wherein the feature extraction unit is specifically configured to:

determine the feature information having key performance indicator value that meets a preset relationship with a preset performance indicator value as the target feature information; or rank, based on the key performance indicator value of each piece of feature information, the feature information in a predetermined way, and determine the feature information that is ranked before a predetermined ranking place as the target feature information.

**12.** The apparatus according to claim 9, wherein the feature extraction unit is specifically configured to: perform dimensionality reduction transformation on the feature information to obtain target feature information in response to that the type is a distance-based unsupervised machine learning type.

**13.** A risk identification apparatus, comprising: a risk identification unit, configured to, by the apparatus according to any one of claims 9 to 12, train and obtain a plurality of target risk identification models corresponding to a plurality of target unsupervised machine learning algorithms, determine a first risk identification model having identification accuracy meeting a predetermined threshold from the plurality of target risk identification models, and perform risk identification on new samples based on the first risk identification model to obtain a risk identification result.

**14.** A server, comprising a memory, a processor, and a computer program stored in the memory and executable on the processor, wherein the processor implements the steps of the method according to any one of claims 1 to 8 when executing the program.

**15.** A computer-readable storage medium storing a computer program, wherein the steps of the method according to any one of claims 1 to 8 are implemented when the program is executed by a processor.

User side                Network side

| Terminal 100 | Server 200 |
|:---:|:---:|

FIG. 1

S201

Determine a type of a target unsupervised machine learning algorithm

S202

Extract feature information from input information, and extract target feature information from the feature information in a way of extracting feature information corresponding to the type of the target unsupervised machine learning algorithm

S203

Obtain a target risk identification model corresponding to the target unsupervised machine learning algorithm by training a risk identification model using the target feature information and the target unsupervised machine learning algorithm

FIG. 2

301 302 303

| Determining unit | — | Feature extraction unit | — | Training unit |

FIG. 3

402 404

| Processor | | Memory |

400

406

| Bus interface | ↔ | Receiver | 401

| | ↔ | Transmitter | 403

FIG. 4

## INTERNATIONAL SEARCH REPORT

| International application No. |
|---|
| **PCT/CN2019/113008** |

**A. CLASSIFICATION OF SUBJECT MATTER**

G06Q 10/06(2012.01)i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE: 风险, 异常, 识别, 检测, 无监督, 算法, 类型, 类别, 特征, 训练, 树, 距离, 关键绩效指标, 降维, risk, abnormal, recognition, detect, unsupervised, algorithm, type, feature, train, tree, distance, KPI, reduce, dimensionality

**C. DOCUMENTS CONSIDERED TO BE RELEVANT**

| Category* | Citation of document, with indication, where appropriate, of the relevant passages | Relevant to claim No. |
|---|---|---|
| PX | CN 110009174 A (ALIBABA GROUP HOLDING LIMITED) 12 July 2019 (2019-07-12) claims 1-15 | 1-15 |
| Y | CN 108564460 A (SUNSHINE PROPERTY & CASUALTY INSURANCE CO., LTD.) 21 September 2018 (2018-09-21) description, paragraphs [0068]-[0082], [0091]-[0120], and [0170] | 1-15 |
| Y | Reacubeth. "特征选择算法综述 (Survey of Feature Selection Algorithm)" *CSDN*, 01 September 2017 (2017-09-01), p. 1 | 1-15 |
| A | CN 106960358 A (CHONGQING XIAOFU NONGKANG AGRICULTURE TECH SERVICE CO., LTD.) 18 July 2017 (2017-07-18) entire document | 1-15 |
| A | CN 107196953 A (SHANGHAI DIGBULL INFORMATION TECH CO., LTD.) 22 September 2017 (2017-09-22) entire document | 1-15 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 January 2020** | **23 January 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2019/113008**

**C.    DOCUMENTS CONSIDERED TO BE RELEVANT**

| Category* | Citation of document, with indication, where appropriate, of the relevant passages | Relevant to claim No. |
|---|---|---|
| A | CN 101714273 A (BEIJING INFO SCIENCE & TECH CO., LTD.) 26 May 2010 (2010-05-26)<br>    entire document | 1-15 |

Form PCT/ISA/210 (second sheet) (January 2015)

**INTERNATIONAL SEARCH REPORT**
Information on patent family members

International application No.

**PCT/CN2019/113008**

| Patent document cited in search report | | | Publication date (day/month/year) | Patent family member(s) | | | Publication date (day/month/year) |
|---|---|---|---|---|---|---|---|
| CN | 110009174 | A | 12 July 2019 | None | | | |
| CN | 108564460 | A | 21 September 2018 | WO | 2019137050 | A1 | 18 July 2019 |
| CN | 106960358 | A | 18 July 2017 | None | | | |
| CN | 107196953 | A | 22 September 2017 | None | | | |
| CN | 101714273 | A | 26 May 2010 | None | | | |

Form PCT/ISA/210 (patent family annex) (January 2015)